**Europäisches Patentamt**

**European Patent Office**

**Office européen des brevets**

(19)

(11) **EP 1 150 326 A1**

(12) **EUROPÄISCHE PATENTANMELDUNG**

(43) Veröffentlichungstag:
**31.10.2001 Patentblatt 2001/44**

(51) Int Cl.⁷: **H01J 29/89**

(21) Anmeldenummer: **01000114.7**

(22) Anmeldetag: **19.04.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **26.04.2000 DE 10020326**

(71) Anmelder:
• **Philips Corporate Intellectual Property GmbH 52064 Aachen (DE)**
Benannte Vertragsstaaten:
**DE**
• **Koninklijke Philips Electronics N.V. 5621 BA Eindhoven (NL)**
Benannte Vertragsstaaten:
**FR GB**

(72) Erfinder:
• **Bechtel, Helmut 52064, Aachen (DE)**
• **Gläser, Harald 52064, Aachen (DE)**
• **Opitz, Joachim 52064, Aachen (DE)**

(74) Vertreter: **Volmer, Georg, Dipl.-Ing. Philips Corporate Intellectual Property GmbH, Habsburgerallee 11 52064 Aachen (DE)**

(54) **Farbbildschirm mit Farbfilter**

(57)    Die Erfindung beschreibt einen Faibbildsdhirm mit erhöhten Kontrast. Der Farbbildschirm enthält eine Falbfilterschicht zwischen Bildschirmglas und Leuchtstoffschicht, die im Bereich der roten Leuchtstoffe ein rotes Pigment, im Bereich der blauen Leuchtstoffe ein blaues Pigment und im Bereich der grünen Leuchtstoffe ein blaues oder ein rotes Pigment aufweist.

EP 1 150 326 A1

**Beschreibung**

Die Erfindung betrifft einen Farbbildschirm, insbesondere für eine Farbkathodenstrahlröhre oder einen Farbmonitor, ausgerüstet mit einem Bildschirmglas, einer Leuchtstoffschicht, die an der Innenfläche des Bildschirmglases angebracht ist und rote, grüne und blaue Leuchtstoffe enthält, und mit einer Farbfilterschicht zwischen Bildschirmglas und Leuchtstoffschicht.

Farbbildschirme und Farbmonitore werden häufig in hellem Umgebungslicht benutzt. Um das Schirmbild bei dieser Beleuchtung besser sichtbar zu machen und um die Augen weniger zu ermüden, soll ihr Bildschirm blendfrei, reflexionsarm und kontrastreich sein.

Für ausreichenden Bildkontrast bei Tageslicht ist es wichtig, dass der Farbbildschirm eine hohe Luminanz bei möglichst geringer Reflexion von externem Licht aufweist. Die Kenngröße dieser Eigenschaft ist die sogenannte Luminance Contrast Performance (LCP):

$$LCP = \frac{Luminanz\ (L)}{\sqrt{Reflexion\ (R)}}$$

Eine Erhöhung des Kontrastes und somit eine Verbesserung des LCP-Wertes kann zum Beispiel durch Farbfilter in Form anorganischer Pigmente erreicht werden, die so ausgewählt werden, dass sie für die vom jeweiligen Leuchtstoff emittierte Farbe möglichst transparent sind und die restlichen Spektralanteile absorbieren. Aufgebracht werden diese Farbfilter als separate Schichten zwischen der Leuchtstoffschicht und dem Bildschirm. So werden die grünen und blauen Komponenten des einfallenden Umgebungslichtes von einem roten Pigment, die blauen und roten Komponenten von einem grünen Pigment und die grünen und roten Komponenten von einem blauen Pigment absorbiert. Außerdem verbessern diese transparenten Farbfilter die Farbreinheit des vom Leuchtstoff emittierten Lichtes.

In vielen Fällen tragen die verwendeten Grünpigmente als grüne Farbfilter kaum zur Verbesserung des LCP-Wertes bei. In der US 5,942,848 wird ein Farbbildschirm beschrieben, der keinen Farbfilter zwischen grünem Leuchtstoff und Bildschirm aufweist.

Es ist die Aufgabe der vorliegenden Erfindung, einen Farbbildschirm zur Verfügung zu stellen, der ein kontrastreiches Bild liefert.

Die Aufgabe wird gelöst, durch einen Farbbildschirm ausgerüstet mit einem Bildschirmglas, einer Leuchtstoffschicht, die an der Innenfläche des Bildschirmglases angebracht ist und rote, grüne und blaue Leuchtstoffe enthält, und mit einer Farbfilterschicht zwischen Bildschirmglas und Leuchtstoffschicht, die im Bereich der roten Leuchtstoffe in der Leuchtstoffschicht eine rote Farbfilterschicht, im Bereich der blauen Leuchtstoffe in der Leuchtstoffschicht eine blaue Farbfilterschicht und im Bereich der grünen Leuchtstoffe eine blaue oder eine rote Farbfilterschicht aufweist.

Überraschenderweise zeigt die rote oder die blaue Farbfilterschicht im Bereich der grünemittierende Leuchtstoffe vorteilhafte Effekte. So wird der LCP-Wert des gesamten Farbbildschirms verbessert. Weiterhin wird mit einer roten Falbfilterschicht zwischen Bildschirmglas und grünem Leuchtstoff der Farbpunkt des emittierten grünen Lichts zu höheren x-Werten, das heißt in den gelben Bereich, verschoben. Dagegen wird mit einer blauen Farbfilterschicht im Bereich der grünen Leuchtstoffe der Farbpunkt in den grünen Spektralbereich verlagert. Insgesamt kann dadurch der Bereich der darstellbaren Farben vergrößert werden. Außerdem kann die Farbe des nicht in Betrieb befindlichen Farbbildschirms, die sogenannte Body Colour, in einem weiteren Bereich variiert werden.

Es ist bevorzugt, dass die Dicke der roten Farbfilterschicht im Bereich der grünen Leuchtstoffe kleiner ist als die Dicke der roten Farbfilterschicht im Bereich der roten Leuchtstoffe.

Es ist auch bevorzugt, dass die Dicke der blauen Farbfilterschicht im Bereich der grünen Leuchtstoffe kleiner ist als die Dicke der blauen Farbfilterschicht im Bereich der blauen Leuchtstoffe.

Der LCP-Wert wird in diesen beiden Ausführungsformen besonders stark verbessert.

Außerdem ist es bevorzugt, dass die blaue Farbfilterschicht ein Pigment ausgewählt aus der Gruppe CoO-$Al_2O_3$ und Ultramarin-Pigmente enthält.

Es ist weiterhin bevorzugt, dass die rote Farbfilterschicht ein Pigment ausgewählt aus der Gruppe $Fe_2O_3$, TaON und CdS-CdSe enthält.

All diese Pigmente sind in Teilen des Emissionsbereich des grünen Leuchtstoffes transparent.

Es ist ganz besonders bevorzugt, dass die Pigmente einen mittleren Partikeldurchmesser kleiner 200 nm besitzen.

Pigmente mit einem Teilchendurchmesser kleiner als 200 nm zeigen keine unerwünschte Streuung des sichtbaren Lichtes.

Es kann vorteilhaft sein, dass auf dem Bildschirmglas eine Schwarzmatrix aufgebracht ist.

Eine Schwarzmatrix verbessert den Kontrast des auf dem Bildschirm dargestellten Bildes, indem von außen auffallendes sichtbares Licht absorbiert wird.

Im folgenden wird die Erfindung anhand von 8 Figuren näher erläutert und es werden 9 Ausführungsbeispiele angegeben. Dabei zeigt

Fig. 1                    die Emissionsbanden von einem blauen, einem rotem und einem grünem Leuchtstoff sowie die Transmissionsbanden eines roten und eines blauen Pigments und

Fig. 2 bis Fig. 8         die CIE Farbpunkte der roten, blauen und grünen Leuchtstoffe.

Zur Herstellung einer Farbfilterschicht wird ein geeignetes Pigment in Wasser unter Zusatz von Dispergierhilfsmitteln mit einem Rührwerk oder einer Mühle dispergiert. Es wird eine Suspension von Primärpartikeln mit einem mittleren Durchmesser kleiner 200 nm erhalten. Diese Suspension wird filtriert, um Verunreinigungen wie Staub, Abrieb von Mahlwerkzeugen oder harte Agglomerate des eingesetzten Pigments abzutrennen. Durch geeignete Wahl der Porengröße des Filters werden alle Verunreinigungen aus der Suspension entfernt, die größer als die spätere Schichtdicke des Farbfilters sind. Sind der Suspension weitere Additive wie beispielsweise organische Binder oder ein Antischaummittel zugesetzt, ist es vorteilhaft die entsprechenden Additiv-Lösungen vorher zu filtrieren.

Das Aufbringen und Strukturieren der Farbfilterschicht kann mittels unterschiedlicher Verfahren erfolgen.

Eine Möglichkeit ist, die erhaltene Suspension mit einem photosensitiven Zusatz, der beispielsweise Polyvinylalkohol und Natriumdichromat enthalten kann, zu versehen. Anschließend wird die Suspension mittels Sprühen, Tauchen oder Spincoaten homogen auf der Innenseite des Bildschirmglases aufgebracht. Der "nasse" Film wird beispielsweise durch Erwärmen, Infrarotstrahlung oder Mikrowellenstrahlung getrocknet. Die erhaltene Farbfilterschicht wird durch eine Maske belichtet und die belichteten Flächen härten aus. Durch Absprühen mit Wasser werden die nicht belichteten Bereiche abgespült und entfernt.

Eine andere Möglichkeit stellt das sogenannte "Lift-off-Verfahren" dar. Hierbei wird zuerst eine photosensitive Polymerschicht auf dem Bildschirmglas aufgebracht und anschließend durch eine Maske belichtet. Die belichteten Flächen vernetzen und die unbelichteten Flächen durch einen Entwicklungsschritt entfernt. Auf das verbleibende Polymermuster wird mittels Sprühen, Tauchen oder Spincoaten die Pigmentsuspension auf der Innenseite des Bildschirms abgeschieden und diese anschließend getrocknet. Durch eine reaktive Lösung wie zum Beispiel eine starke Säure, wird das vernetzte Polymer in eine lösliche Form überführt. Durch Absprühen mit einer Entwicklerflüssigkeit wird das Polymer samt darauf befindlichen Teilen der Farbfilterschicht abgelöst, während die direkt auf dem Bildschirmglas haftende Farbfilterschicht nicht abgelöst wird.

Mit Hilfe dieser Verfahren werden Farbfilterschichten im Bereich des grünen und des blauen Leuchtstoffes bzw. im Bereich des grünen und des roten Leuchtstoffes erhalten, die die gleiche Schichtdicke haben. Es kann aber vorteilhaft sein, dass die rote bzw. blaue Farbfilterschicht im Bereich des grünen Leuchtstoffes eine geringere Schichtdicke aufweist als die rote bzw. blaue Farbfilterschicht im Bereich der blauen bzw. der roten Leuchtstoffe. Dies kann einerseits erreicht werden, indem die Farbfilterschicht im Bereich des grünen Leuchtstoffes in einem separaten Verfahrensschritt hergestellt wird oder der Suspension des Farbfilterpigments ein nicht-lineares photosensitives System zugesetzt wird. Durch unterschiedlich lange Belichtungszeiten der entsprechenden Bereiche wird eine Farbfilterschicht mit verschiedenen Schichtdicken erreicht. Solch ein nicht-lineares photosensitives System kann beispielsweise ein wasserlösliches Polymer wie Polyvinylalkohol (PVA) oder Polyvinylpyrrolidon (PVP) enthalten, welche durch wasserlösliche Bisazid-Derivate wie zum Beispiel Natriumsalze von Diazostilben, Diazodibenzolacton oder Bisazidosulfobenzylidencyclopentanon sensibilisiert weiden.

Eine weitere vorteilhafte Ausführung kann sein, die Belichtung einer Farbfilterschicht von der Außenseite des Bildschirmglases zu belichten, da die Schichten an der Grenzfläche zum Bildschirmglas als erstes vernetzen und besonders gut haften.

Durch geeignete Kombination der beschriebenen Verfahren kann ein roter Farbfilter mit gleicher oder unterschiedlicher Schichtdicke im Bereich der roten und grünen Leuchtstoffe und blauer Farbfilter im Bereich der blauen Leuchtstoffe aufgebracht werden. Ebenso kann ein blauer Farbfilter mit gleicher oder unterschiedlicher Schichtdicke im Bereich der blauen und grünen Leuchtstoffe und roter Farbfilter im Bereich der roten Leuchtstoffe aufgebracht werden.

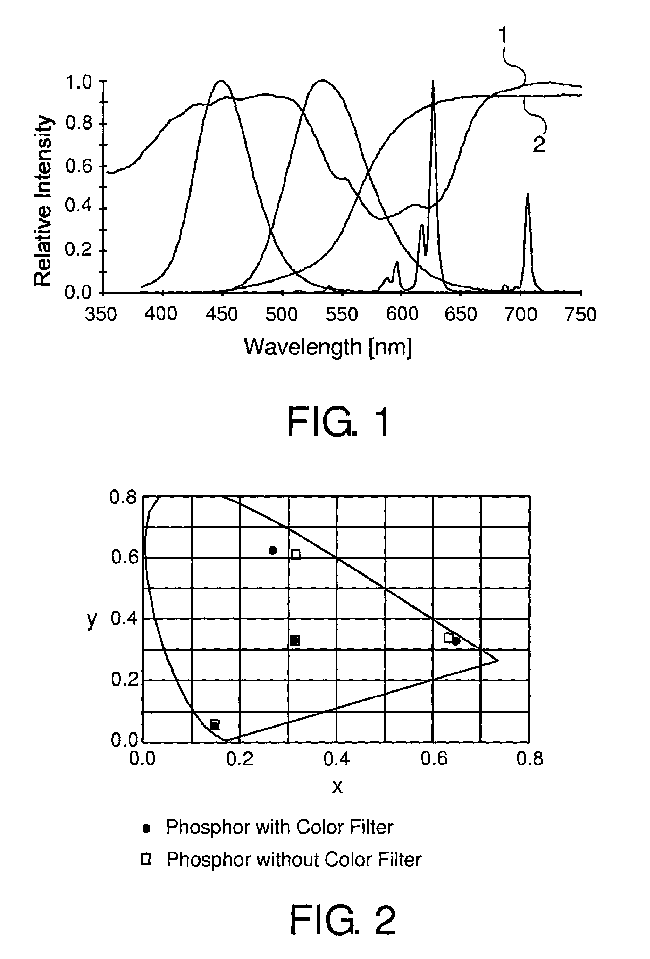

Als Pigmente für eine rote Farbfilterschicht können beispielsweise $Fe_2O_3$, TaON oder CdS-CdSe und als Pigmente für eine blaue Farbfilterschicht können zum Beispiel $CoO-Al_2O_3$ oder Ultramarin verwendet werden. Wie in Fig 1 für die Pigmente $CoO-Al_2O_3$ und $Fe_2O_3$ beispielhaft gezeigt, sind all diese Pigmente teilweise im Emissionsbereich des grünen Leuchtstoffes ZnS:Cu,Au transparent. Kurve 1 entspricht der Transmissionskurve von $CoO-Al_2O_3$ und Kurve 2 der Transmissionskurve von $Fe_2O_3$.

Zur Herstellung eines Farbbildschirms kann beispielsweise das Bildschirmglas zunächst mittels eines photolithographischen Verfahrens mit dem Muster einer Schwarzmatrix überzogen werden. Die Farbfilterschichten werden nach einem der oben beschriebenen Verfahren derart auf dem Bildschirmglas aufgebracht, dass diese zwischen dem Bildschirmglas und dem entsprechenden Leuchtstoffraster positioniert sind. Danach werden die Raster der drei Primärfarben Blau, Rot und Grün unter Benutzung von Suspensionen der Leuchtstoffe in drei aufeinanderfolgenden photolithographischen Schritten nach den bekannten Verfahren aufgebracht. Alternativ können die Leuchtstoffe auch in einem Druckverfahren, wie zum Beispiel Siebdruck, aufgebracht werden. Der fertige, alle drei Farben und die Farbfilterschichten umfassende Farbbildschirm kann für normale Anwendungen in Farbkathodenstrahlröhren oder Farbmonitoren mit einem Aluminiumfilm auf der Rückseite versehen werden.

Ein erfindungsgemäßer Farbbildschirm kann zum Beispiel zur Herstellung einer Farbkathodenstrahlröhre, welche ein Gehäuse, einen Farbbildschirm, einen Hals und einen den Farbbildschirm mit dem Hals verbindenden Konus und eine im Inneren des Halses vorgesehene Elektronenkanone zur Emission mindestens eines Elektronenstrahls aufweist, verwendet werden.

In Fig. 2 bis Fig 8 sind die CIE Farbdreiecke der roten, blauen und grünen Leuchtstoffe in einer Farbkathodenstrahlröhre mit und ohne Unterlegung von Farbfiltern gezeigt. Als blauer Leuchtstoff wurde ZnS:Ag, als grüner Leuchtstoff ZnS:Cu,Au und als roter Leuchtstoff wurde $Y_2O_2S$:Eu eingesetzt.

Im folgenden werden Ausführungsformen der Eifindung erläutert, die beispielhafte Realisierungsmöglichkeiten darstellen.

Ausführungsbeispiel 1

Zur Herstellung einer roten Farbfilterschicht wurden 750 g rotes Eisenoxid $Fe_2O_3$ in 4.25 l einer wässrigen Lösung von 37.5 g eines Natriumsalzes einer Polyacrylsäure als Dispergiermittel und 75 g einer 5 %igen Lösung eines nicht-ionogen Antischaummittels eingerührt. Eine Kugelmühle wurde unter Zusatz von Glaskugeln zu 50 % mit der vordispergierten $Fe_2O_3$-Suspension gefüllt und die Drehzahl wurde auf 75 % der kritischen Drehzahl eingestellt. Es wurde eine stabile Suspension der $Fe_2O_3$ Partikel mit einer mittleren Teilchengröße von 105 nm erhalten.

Nach dem Mahlen wurde die Suspension mit 3.81 Wasser verdünnt und über ein Siebgewebe von den Glasperlen abgetrennt. Die $Fe_2O_3$-haltige Suspension hatte eine Pigmentkonzentration von 8.5 %. Die erhaltene Suspension war über einen Zeitraum von mehreren Wochen stabil.

Die Schichtdicke des roten Farbfilter und die Pigmentkonzentration konnte durch Verdünnen der $Fe_2O_3$-haltigen Suspension eingestellt werden. Die Suspension wurde mittels Spincoaten auf einem mit einer photosensitiven Polymerschicht aus Polyvinylpyrrolidon vorstrukturierten Bildschirmglas aufgetragen. Die Schichtdicken der roten Farbfilterschichten betrugen je Verdünnungsgrad nach dem Trocknen zwischen 0.5 µm und 0.15 µm und die Pigmentkonzentration betrug 7.5 Gew.-% und 2.3 Gew.-%. Die restlichen Anteile Polymerschicht wurden mitsamt der darauf abgeschiedenen Farbfilterschicht durch einen Entwicklungsschritt entfernt.

Ausführungsbeispiel 2

Zur Herstellung einer blauen Farbfilterschicht wurden 60 g $CoO\text{-}Al_2O_3$ in eine Dispergiermittel-Lösung von 3.0 g eines Natriumsalzes einer Polyacrylsäure in 400 ml Wasser eingerührt. Die erhaltene Suspension wurde in einer Kugelmühle mit Glaskugeln gemahlen. Die Kugelmühle war zu 50% gefüllt und die Drehzahl wurde auf 60% der kritischen Drehzahl eingestellt. Es wurde eine stabile Suspension der Pigmentpartikel mit einer mittleren Teilchengröße wn 85 nm erhalten.

Nach dem Mahlen wurde die Suspension mit Wasser auf eine Pigmentkonzentration von 9 Gew.-% verdünnt und über ein Siebgewebe von den Glasperlen abgetrennt. Die $CoO\text{-}Al_2O_3$-haltige Suspension war über einen Zeitraum von mehreren Wochen stabil.

Die Suspension wurde mit einer 10 %igen Polyvinylalkohol-Lösung gemischt, und die Viskosität auf ca. 30 mPa*s durch Zugabe von Wasser reduziert. Außerdem wurde Natriumdichromat zu der Suspension hinzugefügt. Das Verhältnis Polyvinylalkohol zu Natriumdichromat betrug 10:1.

Die Suspension wurde mittels Spincoaten auf einem Bildschirmglas aufgetragen und nach dem Trocknen wurde eine transparente blaue Farbfilterschicht von 1.0 µm Schichtdicke und einer Pigmentkonzentration von 3.2 Gew.-% erhalten. Die Schicht wurde durch eine Maske mit UV-Licht bestrahlt und so das Polymer an den belichteten Stellen vernetzt. Anschließend wurden durch Sprühen mit warmem Wasser die nicht vernetzten Farbfilterflächen abgewaschen.

Die Schichtdicke und die Pigmentkonzentration einer blauen Farbfilterschicht konnten über die Viskosität der Suspension eingestellt werden. Nach dem Aufbringen und Trocknen der Suspension betrug die Schichtdicke zwischen 3 µm und 0.15 µm und die Pigmentkonzentration betrug 7.5 Gew.-% und 3.5 Gew.-%.

Ein blauer Farbfilter mit $CoO\text{-}A_2O_3$ mit einer Schichtdicke von 4 µm wurde hergestellt, indem die Viskosität der $CoO\text{-}Al_2O_3$-haltige Suspension vor dem Aufbringen auf das Bildschirmglas nicht unter 50 mPa*s reduziert und die Pigmentkonzentration auf 6 Gew.- % gehalten wurde.

Ausführungsbeispiel 3

Auf einem Bildschirmglas wurde zunächst mit einem photolithographischen Prozess eine Schwarzmatrix aufgebracht. Anschließend wurde wie in Ausführungsbeispiel 1 beschrieben, eine strukturierte, rote Farbfilterschicht mit einer Schichtdicke von 0.3 µm und einer Pigmentkonzentration an $Fe_2O_3$ von 4.5 Gew.-% aufgebracht. Anschließend wurde eine strukturierte blaue Farbfilterschicht wie in Ausführungsbeispiel 2 beschrieben aufgebracht. Die Schichtdicke betrug 1 µm und die Pigmentkonzentration an $CoO-Al_2O_3$ 3.2 Gew.-%. Auf die Farbfilterschicht wurden mittels photolithographischer Verfahren die Leuchtstoffe aufgebracht. Als blauer Leuchtstoff wurde ZnS:Ag, als grüner Leuchtstoff ZnS:Cu,Au und als roter Leuchtstoff wurde $Y_2O_2S$:Eu eingesetzt. Die Leuchtstoffe wurden derart aufgebracht, dass sich zwischen rotem Leuchtstoff und Bildschirmglas die rote Farbfilterschicht und zwischen blauem und grünem Leuchtstoff und Bildschirmglas die blaue Farbfilterschicht befand

Der Farbbildschirm wurde zur Herstellung einer Farbkathodenstrahlröhre, welche ein Gehäuse, einen Farbbildschirm, einen Hals und einen den Farbbildschirm mit dem Hals verbindenden Konus und eine im Inneren des Halses vorgesehene Elektronenkanone zur Emission mindestens eines Elektronenstrahls aufweist, verwendet.

In Fig. 2 sind die Farbkoordinaten der Leuchtstoffe mit und ohne Farbfilter im CIE Farbdreieck in einer im Betrieb befindlichen Farbkathodenstrahlröhre gezeigt. Der LCP-Wert der Farbkathodenstrahlröhre war im Vergleich zu einer Farbkathodenstrahlröhre mit demselben Aufbau und denselben Leuchtstoffe, aber ohne Farbfilterschichten um 15 % erhöht. Der Farbpunkt des reflektierten Lichtes betrug x = 0.265, y = 0.264.

Ausführungsbeispiel 4

Auf einem Bildschirmglas wurde zunächst mit einem photolithographischen Prozess eine Schwarzmatrix aufgebracht. Anschließend wurde wie in Ausführungsbeispiel 1 beschrieben, eine strukturierte, rote Farbfilterschicht mit einer Schichtdicke von 0.5 µm und einer Pigmentkonzentration an $Fe_2O_3$ von 7.5 Gew.-% aufgebracht. Anschließend wurde eine strukturierte blaue Farbfilterschicht wie in Ausführungsbeispiel 2 beschrieben aufgebracht. Die Schichtdicke betrug 2 µm und die Pigmentkonzentration an $CoO-Al_2O_3$ 7.5 Gew.-%. Auf die Farbfilterschicht wurden mittels photolithographischer Verfahren die Leuchtstoffe aufgebracht. Als blauer Leuchtstoff wurde ZnS:Ag, als grüner Leuchtstoff ZnS:Cu,Au und als roter Leuchtstoff wurde $Y_2O_2S$:Eu eingesetzt. Die Leuchtstoffe wurden derart aufgebracht, dass sich zwischen rotem Leuchtstoff und Bildschirmglas die rote Farbfilterschicht und zwischen blauem und grünem Leuchtstoff und Bildschirmglas die blaue Farbfilterschicht befand.

Der Farbbildschirm wurde zur Herstellung einer Farbkathodenstrahlröhre, welche ein Gehäuse, einen Farbbildschirm, einen Hals und einen den Farbbildschirm mit dem Hals verbindenden Konus und eine im Inneren des Halses vorgesehene Elektronenkanone zur Emission mindestens eines Elektronenstrahls aufweist, verwendet.

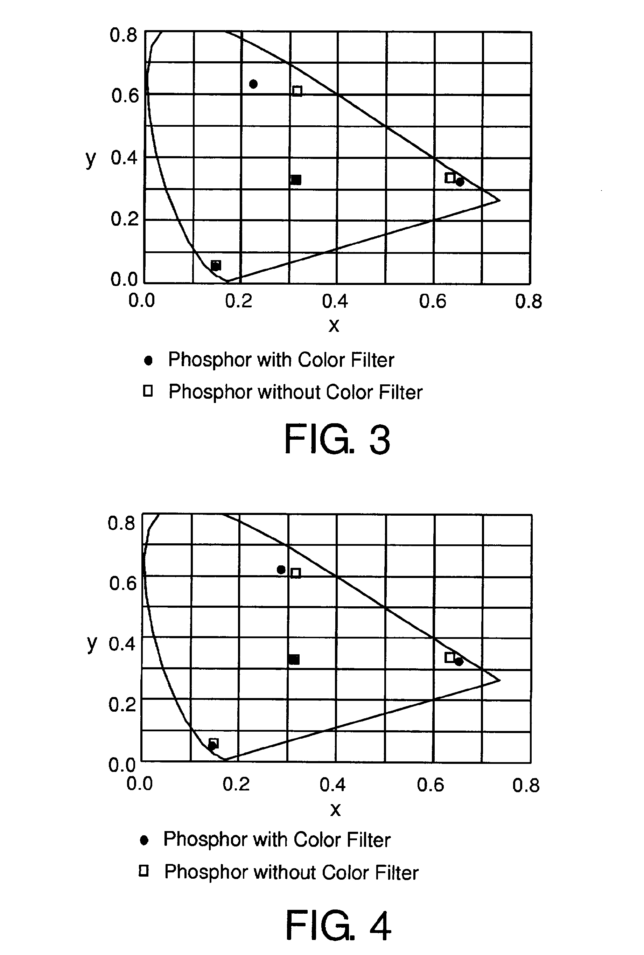

In Fig. 3 sind die Farbkoordinaten der Leuchtstoffe mit und ohne Farbfilter im CIE Farbdreieck in einer im Betrieb befindlichen Farbkathodenstrahlröhre gezeigt. Der LCP-Wert der Farbkathodenstrahlröhre war im Vergleich zu einer Farbkathodenstrahlröhre mit demselben Aufbau und denselben Leuchtstoffe, aber ohne Farbfilterschichten um 14 % erhöht. Der Farbpunkt des reflektierten Lichtes betrug x = 0.219, y = 0.207.

Ausführungsbeispiel 5

Auf einem Bildschirmglas wurde zunächst mit einem photolithographischen Prozess eine Schwarzmatrix aufgebracht. Anschließend wurde wie in Ausführungsbeispiel 1 beschrieben, eine strukturierte, rote Farbfilterschicht mit einer Schichtdicke von 0.4 µm und einer Pigmentkonzentration an $Fe_2O_3$ von 6 Gew.-% aufgebracht. Anschließend wurde eine erste, strukturierte blaue Farbfilterschicht wie in Ausführungsbeispiel 2 beschrieben aufgebracht. Die Schichtdicke betrug 3 µm und die Pigmentkonzentration an $CoO-Al_2O_3$ 6 Gew.-%. Außerdem wurde noch eine zweite, strukturierte blaue Farbfilterschicht wie in Ausführungsbeispiel 2 beschrieben aufgebracht. In diesem Fall betrug die Schichtdicke 0.6 µm. Auf die Farbfilterschicht wurden mittels photolithographischer Verfahren die Leuchtstoffe aufgebracht. Als blauer Leuchtstoff wurde ZnS:Ag als grüner Leuchtstoff ZnS:Cu,Au und als roter Leuchtstoff wurde $Y_2O_2S$:Eu eingesetzt. Die Leuchtstoffe wurden derart aufgebracht, dass sich zwischen rotem Leuchtstoff und Bildschirmglas die rote Farbfilterschicht, zwischen blauem Leuchtstoff und Bildschirmglas die blaue Farbfilterschicht mit einer Schichtdicke von 3 µm und zwischen grünem Leuchtstoff und Bildschirmglas die blaue Farbfilterschicht mit einer Schichtdicke von 0.6 µm befand.

Der Farbbildschirm wurde zur Herstellung einer Farbkathodenstrahlröhre, welche ein Gehäuse, einen Farbbildschirm, einen Hals und einen den Farbbildschirm mit dem Hals verbindenden Konus und eine im Inneren des Halses vorgesehene Elektronenkanone zur Emission mindestens eines Elektronenstrahls aufweist, verwendet.

In Fig. 4 sind die Farbkoordinaten der Leuchtstoffe mit und ohne Farbfilter im CIE Farbdreieck in einer im Betrieb befindlichen Farbkathodenstrahlröhre gezeigt. Der LCP-Wert der Farbkathodenstrahlröhre war im Vergleich zu einer Farbkathodenstrahlröhre mit demselben Aufbau und denselben Leuchtstoffe, aber ohne Farbfilterschichten um 27 % erhöht. Der Farbpunkt des reflektierten Lichtes betrug x = 0.257, y = 0.247.

Ausführungsbeispiel 6

Auf einem Bildschirmglas wurde zunächst mit einem photolithographischen Prozess eine Schwarzmatrix aufgebracht. Anschließend wurde wie in Ausführungsbeispiel 1 beschrieben, eine strukturierte, rote Farbfilterschicht mit einer Schichtdicke von 0.15 μm und einer Pigmentkonzentration an $Fe_2O_3$ von 2.3 Gew-% aufgebracht. Anschließend wurde eine strukturierte blaue Farbfilterschicht wie in Ausführungsbeispiel 2 beschrieben aufgebracht. Die Schichtdicke betrug 4 μm und die Pigmentkonzentration an $CoO-Al_2O_3$ 6 Gew.-%. Auf die Farbfilterschicht wurden mittels photolithographischer Verfahren die Leuchtstoffe aufgebracht. Als blauer Leuchtstoff wurde ZnS:Ag, als grüner Leuchtstoff ZnS:Cu,Au und als roter Leuchtstoff wurde $Y_2O_2S$:Eu eingesetzt. Die Leuchtstoffe wurden derart aufgebracht, dass sich zwischen rotem Leuchtstoff und grünem Leuchtstoff und Bildschirmglas die rote Farbfilterschicht und zwischen blauem Leuchtstoff und Bildschirmglas die blaue Farbfilterschicht befand.
Der Farbbildschirm wurde zur Herstellung einer Farbkathodenstrahlröhre, welche ein Gehäuse, einen Farbbildschirm, einen Hals und einen den Farbbildschirm mit dem Hals verbindenden Konus und eine im Inneren des Halses vorgesehene Elektronenkanone zur Emission mindestens eines Elektronenstrahls aufweist, verwendet.

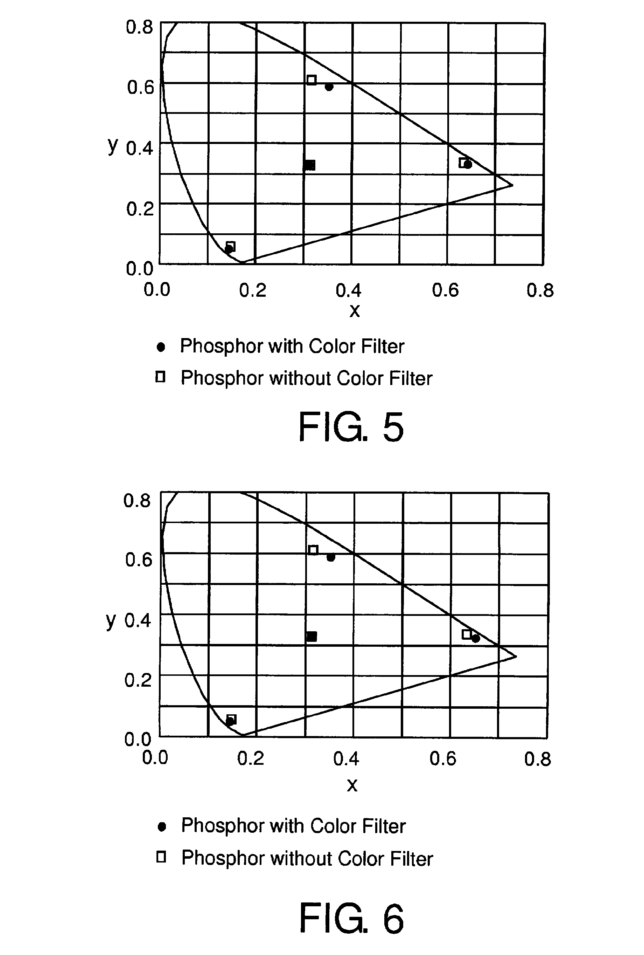

In Fig. 5 sind die Farbkoordinaten der Leuchtstoffe mit und ohne Farbfilter im CIE Farbdreieck in einer im Betrieb befindlichen Farbkathodenstrahlröhre gezeigt. Der LCP-Wert der Farbkathodenstrahlröhre war im Vergleich zu einer Farbkathodenstrahlröhre mit demselben Aufbau und denselben Leuchtstoffe, aber ohne Farbfilterschichten um 25 % erhöht. Der Farbpunkt des reflektierten Lichtes betrug x = 0.336, y = 0.286.

Ausführungsbeispiel 7

Auf einem Bildschirmglas wurde zunächst mit einem photolithographischen Prozess eine Schwarzmatrix aufgebracht. Anschließend wurde wie in Ausführungsbeispiel 1 beschrieben, eine erste, strukturierte, rote Farbfilterschicht mit einer Schichtdicke von 0.4 μm und einer Pigmentkonzentration an $Fe_2O_3$ von 6 Gew.-% aufgebracht. Außerdem wurde eine zweite, strukturierte rote Farbfilterschicht, wie in Ausführungsbeispiel 1 beschrieben, aufgebracht. In diesem Fall betrug die Schichtdicke 0.15 μm und die Pigmentkonzentration 2.3 Gew.-%. Anschließend wurde eine strukturierte, blaue Farbfilterschicht wie in Ausführungsbeispiel 2 beschrieben aufgebracht. Die Schichtdicke betrug 4 μm und die Pigmentkonzentration an $CoO-Al_2O_3$ 6 Gew.-%. Auf die Farbfilterschicht wurden mittels photolithographischer Verfahren die Leuchtstoffe aufgebracht. Als blauer Leuchtstoff wurde ZnS:Ag, als grüner Leuchtstoff ZnS:Cu,Au und als roter Leuchtstoff wurde $Y_2O_2S$:Eu eingesetzt. Die Leuchtstoffe wurden derart aufgebracht, dass sich zwischen rotem Leuchtstoff und Bildschirmglas die rote Farbfilterschicht mit einer Schichtdicke von 0.4 μm, zwischen grünem Leuchtstoff und Bildschirmglas die rote Farbfilterschicht mit einer Schichtdicke von 0.15 μm und zwischen blauem Leuchtstoff und Bildschirmglas die blaue Farbfilterschicht befand.
Der Farbbildschirm wurde zur Herstellung einer Farbkathodenstrahlröhre, welche ein Gehäuse, einen Farbbildschirm, einen Hals und einen den Farbbildschirm mit dem Hals verbindenden Konus und eine im Inneren des Halses vorgesehene Elektronenkanone zur Emission mindestens eines Elektronenstrahls aufweist, verwendet.
In Fig 6 sind die Farbkoordinaten der Leuchtstoffe mit und ohne Farbfilter im CIE Farbdreieck in einer im Betrieb befindlichen Farbkathodenstrahlröhre gezeigt. Der LCP-Wert der Farbkathodenstrahlröhre war im Vergleich zu einer Farbkathodenstrahlröhre mit demselben Aufbau und denselben Leuchtstoffe, aber ohne Farbfilterschichten um 34 % erhöht. Der Farbpunkt des reflektierten Lichtes betrug x = 0.335, y= 0.268.

Ausführungsbeispiel 8

Auf einem Bildschirmglas wurde zunächst mit einem photolithographischen Prozess eine Schwarzmatrix aufgebracht. Anschließend wurde wie in Ausführungsbeispiel 1 beschrieben, eine strukturierte, rote Farbfilterschicht mit einer Schichtdicke von 0.4 μm und einer Pigmentkonzentration an $Fe_2O_3$ von 6 Gew.-% aufgebracht. Anschließend wurde eine erste, strukturierte blaue Farbfilterschicht analog wie in Ausführungsbeispiel 2 beschrieben aufgebracht. Die Schichtdicke betrug 3 μm und die Pigmentkonzentration an Ultramarin 6 Gew.-%. Außerdem wurde noch eine zweite, strukturierte blaue Farbfilterschicht wie in Ausführungsbeispiel 2 beschrieben aufgebracht. In diesem Fall betrug die Schichtdicke 0.3 μm. Auf die Farbfilterschicht wurden mittels photolithographischer Verfahren die Leuchtstoffe aufgebracht. Als blauer Leuchtstoff wurde ZnS:Ag, als grüner Leuchtstoff ZnS:Cu,Au und als roter Leuchtstoff wurde $Y_2O_2S$:Eu eingesetzt. Die Leuchtstoffe wurden derart aufgebracht, dass sich zwischen rotem Leuchtstoff und Bildschirmglas die rote Farbfilterschicht, zwischen blauem Leuchtstoff und Bildschirmglas die blaue Farbfilterschicht mit einer Schichtdicke von 3 μm und zwischen grünem Leuchtstoff und Bildschirmglas die blaue Farbfiltetschicht mit einer Schichtdicke von 0.3 μm befand.
Der Farbbildschirm wurde zur Herstellung einer Farbkathodenstrahlröhre, welche ein Gehäuse, einen Farbbildschirm, einen Hals und einen den Farbbildschirm mit dem Hals verbindenden Konus und eine im Inneren des Halses vorgesehene Elektronenkanone zur Emission mindestens eines Elektronenstrahls aufweist, verwendet.

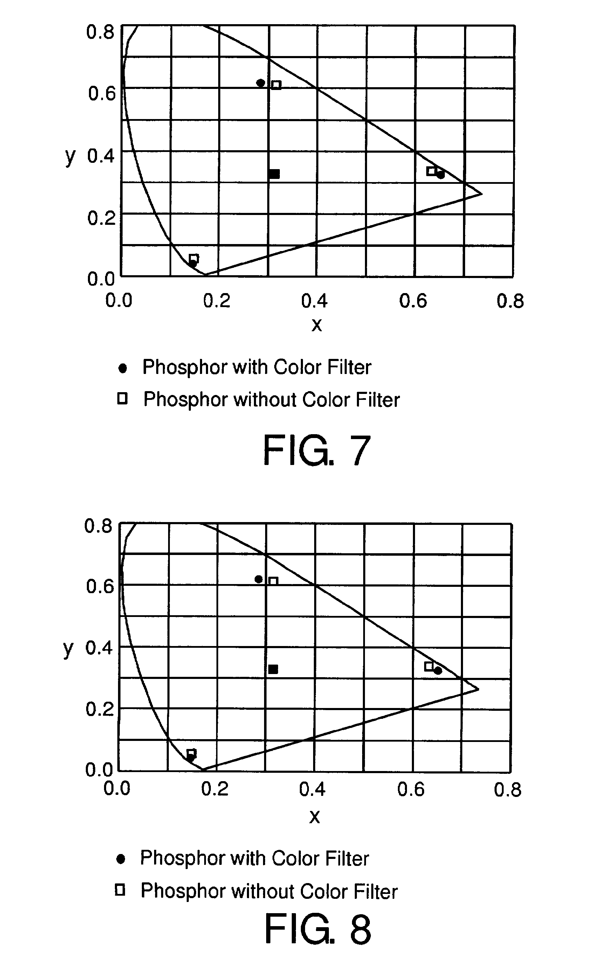

In Fig 7 sind die Farbkoordinaten der Leuchtstoffe mit und ohne Farbfilter im CIE Farbdreieck in einer im Betrieb befindlichen Farbkathodenstrahlröhre gezeigt. Der LCP-Wert der Farbkathodenstrahlröhre war im Vergleich zu einer Farbkathodenstrahlröhre mit demselben Aufbau und denselben Leuchtstoffe, aber ohne Farbfilterschichten um 35.5 % erhöht. Der Farbpunkt des reflektierten Lichtes betrug x = 0.257, y = 0.220. Ausführungsbeispiel 9

Auf einem Bildschirmglas wurde zunächst mit einem photolithographischen Prozess eine Schwarzmatrix aufgebracht. Anschließend wurde analog wie in Ausführungsbeispiel 1 beschrieben, eine strukturierte, rote Farbfilterschicht, welche TaON enthielt, mit einer Schichtdicke von 2 μm aufgebracht. Anschließend wurde eine erste, strukturierte blaue Farbfilterschicht mit Ultramarin analog wie in Ausführungsbeispiel 2 beschrieben aufgebracht. Die Schichtdicke betrug 3 μm und die Pigmentkonzentration an Ultramarin 6 Gew.-%. Außerdem werde noch eine zweite, strukturierte blaue Farbfilterschicht analog wie in Ausführungsbeispiel 2 beschrieben aufgebracht. In diesem Fall betrug die Schichtdicke 0.3 μm. Auf die Farbfilterschicht wurden mittels photolithographischer Verfahren die Leuchtstoffe aufgebracht. Als blauer Leuchtstoff wurde ZnS:Ag, als grüner Leuchtstoff ZnS:Cu,Au und als roter Leuchtstoff wurde $Y_2O_2S$: Eu eingesetzt. Die Leuchtstoffe wurden derart aufgebracht, dass sich zwischen rotem Leuchtstoff und Bildschirmglas die rote Farbfilterschicht, zwischen blauem Leuchtstoff und Bildschirmglas die blaue Farbfilterschicht mit einer Schichtdicke von 3 μm und zwischen grünem Leuchtstoff und Bildschirmglas die blaue Farbfilterschicht mit einer Schichtdicke von 0.3 μm befand.

Der Farbbildschirm wurde zur Herstellung einer Farbkathodenstrahlröhre, welche ein Gehäuse, einen Farbbildschirm, einen Hals und einen den Farbbildschirm mit dem Hals verbindenden Konus und eine im Inneren des Halses vorgesehene Elektronenkanone zur Emission mindestens eines Elektronenstrahls aufweist, verwendet.

In Fig. 8 sind die Farbkoordinaten der Leuchtstoffe mit und ohne Farbfilter im CIE Farbdreieck in einer im Betrieb befindlichen Farbkathodenstrahlröhre gezeigt. Der LCP-Wert der Farbkathodenstrahlröhre war im Vergleich zu einer Farbkathodenstrahlröhre mit demselben Aufbau und denselben Leuchtstoffe, aber ohne Farbfilterschichten um 40 % erhöht. Der Farbpunkt des reflektierten Lichtes betrug x = 0.282, y = 0.230.

**Patentansprüche**

1.  Farbbildschirm ausgerüstet mit einem Bildschirmglas, einer Leuchtstoffechicht, die an der Innenfläche des Bildschirmglases angebracht ist und rote, grüne und blaue Leuchtstoffe enthält, und mit einer Farbfilterschicht zwischen Bildschirmglas und Leuchtstoffschicht, die im Bereich der roten Leuchtstoffe in der Leuchtstoffschicht eine rote Farbfilterschicht, im Bereich der blauen Leuchtstoffe in der Leuchtstoffschicht eine blaue Farbfilterschicht und im Bereich der grünen Leuchtstoffe eine blaue oder eine rote Farbfilterschicht aufweist.

2.  Farbbildschirm nach Anspruch 1,
    **dadurch gekennzeichnet,**
    **dass** die Dicke der roten Farbfilterschicht im Bereich der grünen Leuchtstoffe kleiner ist als die Dicke der roten Farbfilterschicht im Bereich der roten Leuchtstoffe,

3.  Farbbildschirm nach Anspruch 1,
    **dadurch gekennzeichnet,**
    **dass** die Dicke der blauen Farbfilterschicht im Bereich der grünen Leuchtstoffe kleiner ist als die Dicke der blauen Farbfilterschicht im Bereich der blauen Leuchtstoffe.

4.  Farbbildschirm nach Anspruch 1,
    **dadurch gekennzeichnet,**
    **dass** die blaue Farbfilterschicht ein Pigment ausgewählt aus der Gruppe $CoO-Al_2O_3$ und Ultramarin enthält.

5.  Farbbildschirm nach Anspruch 1,
    **dadurch gekennzeichnet,**
    **dass** die rote Farbfilterschicht ein Pigment aus gewählt aus der Gruppe $Fe_2O_3$, TaON und CdS-CdSe enthält.

6.  Farbbildschirm nach Anspruch 4 oder 5,
    **dadurch gekennzeichnet,**
    **dass** die Pigmente einen mittleren Partikeldurchmesser kleiner 200 nm besitzen.

7.  Farbbildschirm nach Anspruch 1,

**dadurch gekennzeichnet,**
**dass** auf dem Bildschirmglas eine Schwarzmatrix aufgebracht ist.

**FIG. 1**

● Phosphor with Color Filter

□ Phosphor without Color Filter

**FIG. 2**

● Phosphor with Color Filter

□ Phosphor without Color Filter

# FIG. 3

● Phosphor with Color Filter

□ Phosphor without Color Filter

# FIG. 4

● Phosphor with Color Filter

□ Phosphor without Color Filter

# FIG. 5

● Phosphor with Color Filter

□ Phosphor without Color Filter

# FIG. 6

- Phosphor with Color Filter
- □ Phosphor without Color Filter

## FIG. 7

- Phosphor with Color Filter
- □ Phosphor without Color Filter

## FIG. 8

Europäisches
Patentamt

**EUROPÄISCHER RECHERCHENBERICHT**

Nummer der Anmeldung

EP 01 00 0114

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | US 5 942 848 A (VAN DOORN ARIE R ET AL) 24. August 1999 (1999-08-24) abstract * Spalte 3, Zeile 29 – Spalte 4, Zeile 37; Abbildung 3J * | 1 | H01J29/89 |
| A | DE 27 31 826 A (LICENTIA GMBH) 25. Januar 1979 (1979-01-25) * Seite 4, Spalte 17-36; Abbildung 2 * | 1 | |
| A | US 5 871 873 A (VAN DOORN ARIE R ET AL) 16. Februar 1999 (1999-02-16) | | |
| A | US 5 340 673 A (TATEYAMA NORIHIRO ET AL) 23. August 1994 (1994-08-23) | | |

**RECHERCHIERTE SACHGEBIETE (Int.Cl.7)**

H01J

Der vorliegende Recherchenbericht wurde für alle Patentansprüche erstellt

| Recherchenort | Abschlußdatum der Recherche | Prüfer |
|---|---|---|
| MÜNCHEN | 16. August 2001 | Centmayer, F |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 01 00 0114

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-08-2001

| Im Recherchenbericht angeführtes Patentdokument | Datum der Veröffentlichung | Mitglied(er) der Patentfamilie | Datum der Veröffentlichung |
|---|---|---|---|
| US 5942848 A | 24-08-1999 | EP 0867033 A<br>WO 9818148 A<br>JP 2000502503 T | 30-09-1998<br>30-04-1998<br>29-02-2000 |
| DE 2731826 A | 25-01-1979 | KEINE | |
| US 5871873 A | 16-02-1999 | EP 0867032 A<br>WO 9818147 A<br>JP 2000507035 T | 30-09-1998<br>30-04-1998<br>06-06-2000 |
| US 5340673 A | 23-08-1994 | JP 5275007 A | 22-10-1993 |

Für nähere Einzelheiten zu diesem Anhang : siehe Amtsblatt des Europäischen Patentamts, Nr.12/82